# EUROPÄISCHE PATENTANMELDUNG

(11) **EP 1 798 866 A1**
(43) Veröffentlichungstag der Anmeldung: **20.06.2007**
(21) Anmeldenummer: 05027783.9
(22) Anmeldetag: 19.12.2005
(51) Int. Cl.: H04B 5/00, G08C 19/00

(54) **Rotationsmaschine und Verwendung von elektrischer Nahfeldkommunikation zur drahtlosen Signalübertragung**

(71) Anmelder: SIEMENS AKTIENGESELLSCHAFT, 80333 München (DE)
(72) Erfinder: Dellantoni, Nikolaus, 2500 Soos (AT); Pohl, Alfred, Dr., 2130 Mistelbach (AT)

(57) **Zusammenfassung**

Die Erfindung betrifft eine Rotationsmaschine, mit einem Stator (10) und mit einem im Stator (10) drehgelagerten Rotor (1) sowie mit einer auf dem Rotor (1) angeordneten Messeinrichtung (3), welche einen Sensor zur Erfassung einer Messgröße und zur Umwandlung der erfassten Messgröße in ein elektrisches Signal umfasst. Um eine besonders zuverlässige Übertragung der vom rotorseitigen Sensor erfassten Messgröße an eine am Stator angeordnete Empfangs- und Auswertevorrichtung zu ermöglichen, wird vorgeschlagen, dass von einer Übertragungsvorrichtung das vom Sensor erzeugte elektrische Signal in Form elektrischer Streufelder (9) an eine am Stator (10) angeordnete Empfangsvorrichtung übertragbar ist.

## Beschreibung

Die Erfindung betrifft eine Rotationsmaschine mit einem Stator und mit einem im Stator drehgelagerten Rotor sowie mit einer auf dem Rotor angeordneten Messeinrichtung, welche einen Sensor zur Erfassung einer Messgröße und zur Umwandlung der erfassten Messgröße in ein elektrisches Signal umfasst.

Zur kontaktlosen Übertragung der von mitdrehenden Messeinrichtungen erfassten Signale sind Funksensoren bekannt, die meist in einem lizenzfreien Frequenzband, z. B. bei 433 MHz arbeiten. Da Funksensoren jedoch aktive Halbleiterbauelemente enthalten, ist eine obere, maximal zulässige Betriebstemperatur bei ca. 250°C erreicht. Diese Bauelemente dürfen beim Betrieb keine höheren Temperaturen erfahren, da sie ansonsten zerstört werden. Außerdem benötigen die aktiven Bauelemente eine Energieversorgung, die nach Möglichkeit wartungsfrei und dauerhaft die benötigte Energie zur Verfügung stellt.

So ist es beispielsweise bei den sich mit dem Rotor der Gasturbine mitdrehenden Bauteilen problematisch, deren Bauteiltemperaturen zu erfassen und aus dem rotierenden System in das stehende System zu übertragen.

Das beim Betrieb der Gasturbine entstehende Heißgas weist eine Temperatur von weit über 1.400°C auf, wodurch die heißgasbeaufschlagten Bauteile der Gasturbine mittels besonderer Maßnahmen, beispielsweise einer aktiven Kühlung, vor den hohen Temperaturen geschützt werden müssen. Um eine bedarfsgerechte Kühlung dieser Bauteile zu ermöglichen, ist es von besonderem Interesse, deren exakte Oberflächentemperatur zu ermitteln. Ebenso ist es zum Betrieb der Gasturbine wünschenswert und erforderlich, die Temperaturen des Heißgases an unterschiedlichen Stellen im Heißgaskanal zu erfassen und ggf. für Analyse- und Überwachungszwecke zu protokollieren.

Die Funkübertragung vom Rotor zum Stator bei einer axial durchströmten Gasturbine kann zudem dadurch eingeschränkt sein, dass beispielsweise die Lauf- und Leitschaufeln einer Turbine die Funkwellen der Sender/Empfänger-Bauteile abschirmen bzw. reflektieren. Eine zuverlässige Funk-Übertragung ist dann nicht immer gewährleistet.

Aufgabe der Erfindung ist die Bereitstellung einer gattungsgemäßen Rotationsmaschine, welche eine besonders zuverlässige Übertragung der vom rotorseitigen Sensor erfassten Messgröße an eine am Stator angeordnete Empfangs- und Auswertevorrichtung unter Berücksichtigung der an den Bauteilen auftretenden hohen Betriebstemperaturen ermöglicht.

Die auf die Rotationsmaschine gerichtete Aufgabe wird gelöst, indem von einer Übertragungsvorrichtung das vom Sensor erzeugte elektrische Signal in Form elektrischer Streufelder an eine am Stator angeordnete Empfangsvorrichtung übertragbar ist.

Die Übertragung elektrischer Signale mittels elektrischer Streufelder wird auch als Nahfeld-Kommunikation bezeichnet und weist als Signalübermittlungssystem mindestens ein mit einem Sensor verbundenes Koppelelement auf, welches im Wesentlichen ein elektrisches Nahfeld ausbilden kann. Das Nahfeld dient als Übertragungsmedium für eine die Messgröße beschreibende Wechselspannung, welche aus dem rotierenden System in das drehfeste System übertragen wird. Wesentlich ist, dass die Frequenz des Wechselspannungssignals der Messgröße und die Koppel-Einrichtungen so aufeinander abgestimmt sind, dass tatsächlich eine Nahfeldkommunikation stattfindet, dass also keine Funkverbindung mit vorwiegender elektromagnetischer Abstrahlung des Signals in den Freiraum erfolgt, sondern tatsächlich eine vorzugsweise kapazitive Kopplung zwischen drehenden und drehfesten Koppelelementen erfolgt, die aber in der Weise erfolgen muss, dass an einer örtlich entfernten Stelle ein Signal mit ausreichendem Signalpegel empfangen werden kann.

Mit dem erfindungsgemäßen System werden die Verluste eines Energie abstrahlenden Systems vermieden und ein sehr niedriger Energieverbrauch erreicht. Eine aktive Energieversorgung des am Rotor montierten Sensors ist somit in vorteilhafter Weise nicht mehr erforderlich. Außerdem breiten sich keine unerwünschten elektromagnetischen Streufelder aufgrund von reflektierten Funkwellen aus, da die Einkopplung und somit die Bereitstellung des elektrisches Nahfeldes von einer Nahfeldquelle mit einer nur geringen Reichweite vonstatten geht und elektromagnetische Funkwellen insgesamt vermieden werden.

Die kapazitive Signalüberragung findet somit im quasistationären elektrischen Nahfeld statt, welchem eine hochfrequente Wechselspannung aufprägbar ist. Das quasistationäre elektrische Nahfeld dient als Übertragungsmedium, welchem die Wechselspannung als Signal überlagert werden kann. Folglich sind die üblichen Verfahren der Signalaufbereitung wie Modulation und Demodulation einsetzbar.

In vorteilhafter Weise weist die Übertragungsvorrichtung einen offenen Kondensator mit zwei Koppelelementen auf, dessen erstes, am Rotor angeordnetes Koppelelement als Nahfeldquelle mit der Messeinrichtung elektrisch verbunden ist und dessen zweites, am Stator angeordnetes Koppelelement als Empfangseinrichtung mit der Auswerteeinrichtung elektrisch verbunden ist. Insbesondere die kapazitive Kopplung mittels eines offenen Kondensators erlaubt die Verwendung elektrischer Streufelder als Übertragungsmedium, dem eine hochfrequente Wechselspannung zur Signalübertragung aufgeprägt werden kann. Besonders vorteilhaft ist, dass die beiden, den offenen Kondensator bildenden Koppelelemente nicht zwingend einander gegenüberliegen müssen, sondern jeweils beliebig am Rotor und am Stator der Rotationsmaschine angeordnet sein können.

Zweckmäßigerweise ist der Sensor als Resonator oder als fremderregtes Laufzeitelement ausgebildet. Der Sensor weist zur Fremderregung eine Resonanzfrequenz auf, die mit der Frequenz einer Wechselspannung abgestimmt ist, welche an der Nahfeldquelle ansteht. Diese Resonanzfrequenz ist von der zu messenden Größe, beispielsweise von der unmittelbaren Umgebungstemperatur des Bauteils oder der Materialtemperatur des Bauteils, auf dem der Sensor befestigt ist, beeinflussbar. Wird nach der Fremderregung des Sensors die dafür nötige Wechselspannung abgeschaltet, schwingt der Resonator mit der entsprechenden temperaturabhängigen Frequenz nach und induziert eine Wechselspannung im Sensor, welche über die Koppelelemente als elektrisches Nahfeld zurückgestrahlt und von der Empfangseinrichtung empfangbar ist. Die Empfangseinrichtung leitet das so vom drehenden System in das stehende System übertragene Wechselspannungssignal an eine Auswerteeinrichtung, in welcher die erfasste und vom Signal dargestellte Messgröße verarbeitet werden kann. Die Messgröße kann protokolliert werden und/oder gegebenenfalls in eine Regelung, beispielsweise zur Durchflusssteuerung der für das Bauteil benötigten Kühlluft, einfließen.

In vorteilhafter Weise kann der Sensor als ein Oberflächenwellen-Bauelement aus einer kristallinen Struktur hergestellt sein. Ebenso kann der Sensor als keramisches Volumenwellenschwinger-Bauelement ausgebildet sein. Beide Bauelemente sind bei besonders hohen, beispielsweise einer der Gasturbine auftretenden Temperaturen einsetzbar, so dass ein wesentlich vergrößerter Bereich der Gasturbine überwacht werden kann.

Unabhängig von der gewählten Weiterbildung des Sensors ist eine zuverlässige Übertragung der im rotierenden System vom Sensor erfassten Messgröße in ein stehendes System möglich, ohne dass dazu im rotierenden System jeweils Energieversorgungen nötig sind. Außerdem kann mit der Erfindung eine besonders einfache Übermittlung von Messgrößen darstellenden Signalen angegeben werden, bei der die beteiligten Koppelelemente nicht zwingend einander gegenüberliegen müssen und auch keinen dedizierten Funkkanal bzw. Ausbreitungsraum für elektromagnetische Funkwellen benötigen.

Die Messung mittels des Oberflächenwellen-Bauelements oder des Volumenwellenschwinger-Bauelements am zu überwachenden Bauteil erfolgt über einen Hochfrequenzimpuls, der vom am Stator angebrachten Koppelelement aus an den Sensor gesendet wird. Dort verwandelt sich die elektrische Wechselspannung in eine mechanische Oberflächenwelle, die, wie ein lokales Erdbeben, auf dem Bauteil entlangläuft und anschließend wieder von Sensor aufgenommen und zurückgestrahlt wird. Wird gleichzeitig auf den Sensor Druck ausgeübt oder ändert sich die Bauteiltemperatur, dann ändert sich auch die Frequenz der Oberflächenwelle. Das so reflektierte Signal wird von der Auswerteeinrichtung registriert, die die beispielsweise von der Bauteiltemperatur abhängige Frequenz des Signals erkennt und auswertet.

Insgesamt wird unter Nahfeld-Kommunikation verstanden, dass die Kopplung zwischen den beiden Koppelelementen nur dann reale Energie überträgt, wenn der leitende Körper und das Koppelelement nicht weiter als eine Maximumsdistanz in der Größenordnung von ca. 10 cm (wird vom Erfinder noch geklärt) voneinander entfernt sind, was bei Rotationsmaschinen der Fall ist.

Die Erfindung wird anhand einer Zeichnung erläutert.
Es zeigen:
- FIG 1: die schematische Darstellung eines Querschnitts durch eine Rotationsmaschine mit einer zur kapazitiven Nahfeldkommunikation ausgebildeten Übertragungsvorrichtung,
- FIG 2: einen an einer Turbinenschaufel der Strömungsmaschine angeordneten Oberflächenwellensensor mit einem Koppelelement und
- FIG 3: ein an einer Turbinenschaufel angeordnetes LC-Glied mit einem Koppelelement.

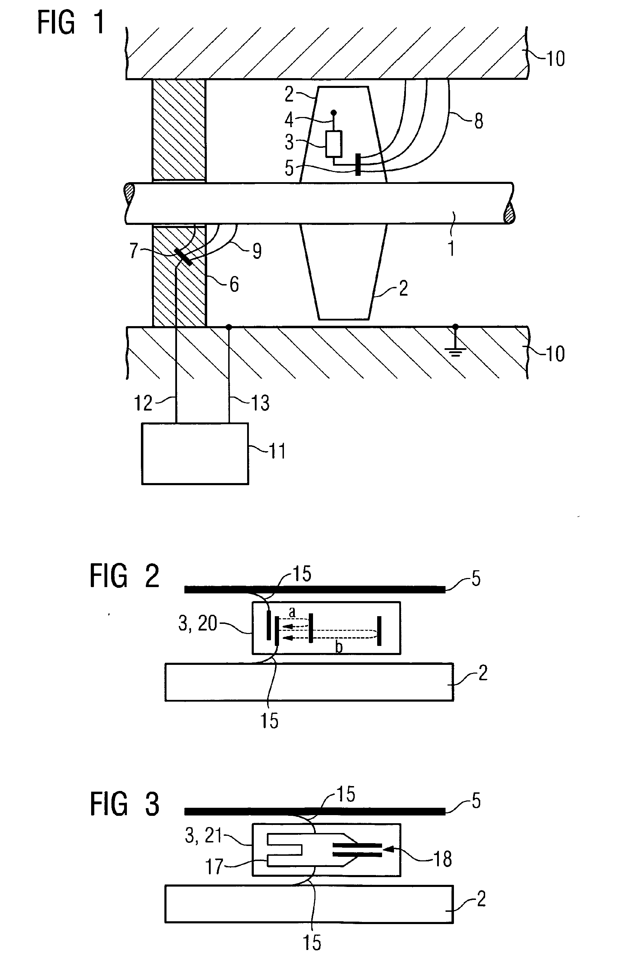

In FIG 1 ist eine schematisch dargestellte Rotationsmaschine im Querschnitt gezeigt, die einen Stator 10 sowie einen im Stator 10 drehgelagerten Rotor 1 aufweist. Am Rotor 1 sind Laufschaufeln 2 angeordnet, die beispielsweise die eines Verdichters oder die einer Turbineneinheit einer axial durchströmten Gasturbine sind. Um Betriebsparameter der Laufschaufel 2 während des Betriebes der Gasturbine zu erfassen, ist an dieser eine Messeinrichtung 3 angeordnet, welche als Sensor die Erfassung einer Messgröße und die Umwandlung der erfassten Messgröße in ein elektrisches Signal durchführen kann. Die Messeinrichtung 3 bzw. der Sensor weist zwei elektrische Kontakte auf, wobei einer der elektrischen Kontakte mit der Laufschaufel 2 in elektrischer Verbindung steht und der andere der beiden elektrischen Kontakte mit einem Koppelelement 5 elektrisch verbunden ist. Das Koppelelement 5 ist als eine elektrisch leitende Platte ausgebildet, welche an und gegenüber der Laufschaufel 2 elektrisch isoliert angebracht ist. Das Koppelelement 5 ist eine erste Hälfte eines offenen Kondensators, dessen zweite Hälfte das am Stator 10 befestigte und gegenüber diesem elektrisch isoliert angeordnete Koppelelement 7 ist. In der in FIG 1 dargestellten Ausgestaltung ist das als Empfangseinrichtung und als Nahfeldquelle ausgebildete Koppelelement 7 beispielsweise an einer Lagerstrebe 6 angeordnet, welche den Rotor 1 abstützt. Ebenso könnte das Koppelelement 7 an einer Leitschaufel der Strömungsmaschine angeordnet sein. Es ist in besonderem Maße hervorzuheben, dass die beiden, den offenen Kondensator bildenden Koppelelemente 5, 7 nicht einander gegenüberliegen müssen, um eine Übertragung von elektrischen Signalen in Form der elektrischen Nahfeld-Kommunikation zu ermöglichen.

Das Koppelelement 7 ist mit einer Auswerteeinrichtung 11 elektrisch verbunden, welche wiederum mit dem Stator 10 über eine elektrische Leitung 13 verbunden ist.

Die Messeinrichtung 3 bzw. der Sensor kann gemäß den in FIG 2 und in FIG 3 dargestellten Ausgestaltungen der Erfindung als Oberflächenwellensensor 20 oder als LC-Glied 21 ausgebildet sein.

Das Oberflächenwellen-Bauelement 20 besteht im Wesentlichen aus kristallinen Strukturen, welche zur Erzeugung von Oberflächenwellen auf der Laufschaufel 2 mittels elektrischer Wechselspannung ausgebildet sind und welche auf der Oberfläche der Laufschaufel 2 auftretende Oberflächenwellen erfassen und in eine elektrische Wechselspannung umwandeln können.

Das LC-Glied 21 umfasst im Wesentlichen eine Spule 17 und einen dazu in Reihe geschlossenen Kondensator 18, zwischen denen jeweils zwei Elektroden 15 angeschlossen sind, die einerseits mit dem Koppelelement 5 und andererseits mit der Laufschaufel 2 elektrisch leitend verbunden sind.

Unabhängig von der Ausgestaltung arbeitet die temperaturabhängige oder auch beispielsweise druckabhängige Messeinrichtung 3 als Resonator, welcher über eine von der Auswerteeinrichtung 11 über das Koppelelement 7 und Rotor 1 eingespeiste Fremderregung (Wechselspannung) zum Schwingen angeregt werden kann. Nach dem Wegfall der Fremderregung schwingt die Messeinrichtung 3 unabhängig von ihrer Ausgestaltung als Oberflächenwellen-Bauelement 20 oder als LC-Glied mit einer messgrößenabhängigen, beispielsweise temperaturabhängigen Frequenz nach. Das frequenzveränderte Signal wird über das von den beiden Koppelelementen 5, 7 erzeugte elektrisches Streufeld 8, 9 und über den Stator 10 und die Leitung 13 zur Auswerteeinrichtung 11 übertragen.

Je nach Wahl der Struktur des LC-Gliedes 21 und der Materialwahl ist die Resonanzfrequenz des LC-Gliedes von der Temperatur abhängig. Während das LC-Glied für Temperaturen bis ca. 200 °C einsetzbar ist, kann das keramische bzw. kristalline Oberflächenwellen-Bauelement 20 besonders hohe Temperaturen bis mindestens 400 °C, wie sie beispielsweise auch in der Turbineneinheit einer axial durchströmten, stationären Gasturbine auftreten, widerstehen.

Es ist insbesondere von Vorteil, wenn die zur Signalübertragung des dem stationären elektrischen Nahfeld aufgeprägte Wechselspannung eine Frequenz zwischen 100 KHz und 100 MHz aufweist. In diesem Bereich liegende Frequenzen sind frei von einer Lizenzvergabe und mit besonders kostengünstigen und handelsüblichen Bauteilen erzeugbar.

Folglich wird mit der Erfindung eine Übertragungsvorrichtung angegeben, bei der ein Oberflächenwellen-Sensor bzw. ein LC-Glied bei einer mittleren Frequenz von beispielsweise 50 MHz aufgebaut und an einer Laufschaufel befestigt ist. Anstatt, wie bekannt, die Anschlüsse dieses Sensors mit einer Antenne zu verbinden, werden diese mit einem Koppelelement und mit der Laufschaufel bzw. Rotor verbunden. Ebenso wird die drehfeste Auswerteeinrichtung mit einem Koppelelement verbunden, so dass jedes Koppelelement unter Verwendung eines elektrischen Streufelds die Umgebung, d.h. entweder den Rotor oder den Stator, kapazitiv koppelt.

## Patentansprüche

1. Rotationsmaschine,
mit einem Stator (10) und mit einem im Stator (10) drehgelagerten Rotor (1) sowie
mit einer auf dem Rotor (1) angeordneten Messeinrichtung (3),
welche einen Sensor zur Erfassung einer Messgröße und zur Umwandlung der erfassten Messgröße in ein elektrisches Signal umfasst,
**dadurch gekennzeichnet, dass**
von einer Übertragungsvorrichtung das vom Sensor erzeugte elektrische Signal in Form elektrischer Streufelder (9) an eine am Stator (10) angeordnete Empfangsvorrichtung übertragbar ist.

2. Rotationsmaschine nach Anspruch 1,
bei der die Übertragungsvorrichtung zur Erzeugung des elektrischen Streufelds einem quasistationären Nahfeld eine hochfrequente Wechselspannung aufprägt.

3. Rotationsmaschine nach Anspruch 1 oder 2,
bei der die Übertragungsvorrichtung einen offenen Kondensator mit zwei Koppelelementen (5, 7) umfasst,
dessen erstes, am Rotor (1) angeordnete Koppelelement (5) mit der Messeinrichtung (3) und dessen zweites, am Stator (10) angeordnete Koppelelement (7) mit einer Auswertevorrichtung (11) elektrisch verbunden ist.

4. Rotationsmaschine nach Anspruch 1, 2 oder 3,
bei der der Sensor als Resonator oder als Laufzeitelement ausgebildet ist.

5. Rotationsmaschine nach einem der vorangehenden Ansprüche, bei der der Sensor ein Oberflächenwellen-Bauelement oder ein Volumenwellenschwinger mit kristallinen Strukturen umfasst.

6. Rotationsmaschine nach einem der vorangehenden Ansprüche, bei der das Oberflächenwellen-Bauelement aus einer Keramik hergestellt ist.

7. Rotationsmaschine nach einem der Ansprüche 1 bis 4,
bei der der Sensor als temperaturabhängiger passiver Resonator ausgebildet ist.

8. Rotationsmaschine nach Anspruch 7,
bei der der Resonator ein LC-Glied ist.

9. Rotationsmaschine nach einem der vorangehenden Ansprüche, die als Gasturbine, Dampfturbine, Verdichter oder Generator ausgebildet ist.

10. Verwendung von elektronischer Nahfeldkommunikation zur drahtlosen Signalübertragung von auf einem Rotor einer Rotationsmaschine erfassten Messgrößen an eine auf dem Stator angeordnete Empfangsvorrichtung.
